(19) Europäisches Patentamt / European Patent Office / Office européen des brevets

(11) **EP 4 671 122 A1**

# (12) DEMANDE DE BREVET EUROPEEN

(43) Date de publication:
**31.12.2025 Bulletin 2026/01**

(21) Numéro de dépôt: **25185636.5**

(22) Date de dépôt: **26.06.2025**

(51) Classification Internationale des Brevets (IPC):
**B64C 3/50** (2006.01)   **B64C 9/00** (2006.01)
**B64C 13/38** (2006.01)   B64C 13/50 (2006.01)
B64C 9/02 (2006.01)   B64C 9/16 (2006.01)
B64C 13/42 (2006.01)   B64D 45/00 (2006.01)

(52) Classification Coopérative des Brevets (CPC):
**B64C 3/50; B64C 9/00; B64C 13/38;** B64C 9/02;
B64C 9/16; B64C 13/42; B64C 13/503;
B64D 2045/0085

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **28.06.2024 FR 2407051**

(71) Demandeur: **Dassault Aviation
75008 Paris (FR)**

(72) Inventeurs:
• **GAUTHIER, Jean**
**92552 SAINT-CLOUD CEDEX (FR)**
• **THOUVENIN, Jean Dominique**
**92552 SAINT-CLOUD CEDEX (FR)**
• **LALAUZE, Vincent**
**13804 ISTRES CEDEX (FR)**

(74) Mandataire: **Lavoix
2, place d'Estienne d'Orves
75441 Paris Cedex 09 (FR)**

(54) **MÉTHODE DE DÉTECTION D'UN JEU DANS UNE GOUVERNE ET SYSTÈME DE DÉTECTION ASSOCIÉ**

(57)    La présente invention concerne une méthode de détection d'un jeu dans un système de contrôle aérodynamique (12), qui comprend une partie fixe (18), une gouverne mobile (20), et deux blocs servocommandes (A, B) pour engendrer un déplacement de la gouverne.

La méthode comprend une séquence de détection de jeu comprenant :
- une phase de commande comprenant :
* la commande asymétrique des blocs servocommandes (A, B) ;

* l'acquisition d'une évolution, au cours de ladite commande asymétrique, d'une variable d'effort représentative d'un effort antagoniste exercé dans un des blocs servocommandes (A, B) au cours de la commande asymétrique ;

- une phase de détection de jeu (106) comprenant la vérification (114) d'une condition de détection de jeu en fonction de ladite évolution acquise.

FIG.3

EP 4 671 122 A1

**Description**

La présente invention concerne une méthode de détection de jeu dans un système de contrôle aérodynamique, le système de contrôle aérodynamique comprenant une partie fixe, une gouverne mobile par rapport à la partie fixe, et une servocommande, la servocommande comprenant au moins deux blocs servocommandes redondants, chaque bloc servocommande étant propre à engendrer un déplacement de la gouverne par rapport à la partie fixe.

L'invention s'applique à toute gouverne et en particulier à toute gouverne d'un aéronef, l'aéronef étant par exemple un aéronef de l'aviation civile, notamment de l'aviation d'affaires.

La servocommande correspond typiquement à un actionneur configuré pour commander l'orientation d'une surface mobile, par l'intermédiaire d'une chaine mécanique. Le changement d'orientation de la surface mobile génère une force aérodynamique qui permet de contrôler l'orientation de l'aéronef selon son axe de tangage, de roulis et/ou de lacet. Un tel changement d'orientation peut également servir dans la fonction hypersustentateur et/ou aérofrein.

La chaine mécanique d'une telle gouverne comprend un certain nombre de vis, de boulons, d'actionneurs et d'autres pièces. Chacune de ces pièces peut présenter un jeu mécanique. Ces jeux peuvent être par exemple la conséquence d'une usure mécanique au niveau de ces pièces (fixation(s), bielles(s) ou charnière(s) par exemple). Ces jeux mécaniques s'accumulent pour former un jeu mécanique total pour la gouverne.

Ce jeu mécanique total se caractérise par une capacité de mouvement libre de la gouverne sans aucun mouvement commandé.

Dans le domaine de l'aviation civile notamment, il devient nécessaire de démontrer que la valeur de ce jeu mécanique total est inférieure à une valeur seuil. Cette exigence doit être respectée en production pour un nouvel aéronef et au cours de la vie ultérieure sous forme de maintenances programmées. Ce jeu mécanique total doit donc être déterminé ou estimé.

Il est connu de vérifier le jeu mécanique total selon une méthode conventionnelle. Dans cette méthode, un actionneur factice rigide est installé à la place de la servocommande hydraulique utilisée en fonctionnement nominal. Un couple prédéfini est appliqué sur le bord de fuite de la surface mobile dans chaque direction, le couple étant mesuré par des jauges de contrainte et enregistré. Le déplacement de la surface est mesuré avec un capteur laser et enregistré. Le jeu mécanique total est alors déduit de la comparaison du couple appliqué et du déplacement mesuré.

Cependant, cette méthode ne donne pas entièrement satisfaction.

En particulier, cette méthode est longue et chère. De plus, en raison des règles de sécurité humaine, toutes les servocommandes hydrauliques doivent être retirées de l'avion pour éviter que l'opérateur n'effectue sa vérification sur un avion dans lequel la pression hydraulique est activée. En outre, en maintenance, les contrôles doivent être effectués par un ingénieur spécialisé formé spécifiquement en ce but, et avec un outillage spécifique qui est lourd et encombrant.

Un but de l'invention est donc de proposer une méthode permettant de détecter la présence d'un jeu au niveau de la chaine de commande mécanique de la gouverne d'un aéronef, qui soit simple à mettre en œuvre, fiable, suffisamment précise, sans danger et rapide.

De plus, un but additionnel de l'invention est que cette méthode puisse être embarquée et intégrée dans l'aéronef et puisse être automatisée.

A cet effet, l'invention a pour objet une méthode de détection d'un jeu du type précité dans laquelle la méthode comprend une séquence de détection de jeu comprenant au moins une phase de commande et une phase de détection de jeu,

- la phase de commande comprenant :

  * la commande asymétrique des blocs servocommandes, au cours de laquelle un premier des blocs servocommandes est commandé pour engendrer un déplacement de la gouverne par rapport à la partie fixe, pendant que le deuxième des blocs servocommandes est commandé différemment;
  * l'acquisition d'une évolution, au cours de ladite commande asymétrique, d'une variable d'effort représentative d'un effort antagoniste exercé dans un des blocs servocommandes au cours de ladite commande asymétrique ;

- la phase de détection de jeu comprenant la vérification d'au moins une condition de détection de jeu en fonction de ladite évolution acquise, un jeu étant détecté si la condition de détection est respectée.

Suivant d'autres aspects avantageux de l'invention, la méthode comprend une ou plusieurs des caractéristiques suivantes, prises isolément ou suivant toutes les combinaisons techniquement possibles :

- au cours de la commande asymétrique, le deuxième des blocs servocommandes est commandé pour maintenir en position la gouverne par rapport à la partie fixe ;
- la phase de commande comprend en outre, pour chacun d'un nombre prédéterminé de point(s) de mesure du système de contrôle aérodynamique, l'acquisition d'au moins une évolution d'un déplacement du point de mesure au cours de ladite commande asymétrique, et, dans laquelle la phase de détection de jeu comprend, pour chaque point de mesure, la vérification d'une condition de détection associée au point de mesure, la vérification comprenant :

    * la détermination d'une amplitude de déplacement dudit point de mesure, atteinte au cours de l'évolution acquise dudit déplacement du point de mesure ;
    * la détermination d'une amplitude de référence associée audit point de mesure, l'amplitude de référence étant déterminée au moins en fonction de l'évolution acquise de la variable d'effort, et
    * la comparaison de l'amplitude de déplacement dudit point de mesure avec l'amplitude de référence, la condition de détection de jeu étant respectée au moins si la différence entre l'amplitude de déplacement dudit point de mesure et l'amplitude de référence est supérieure à un seuil de détection de jeu prédéterminée ;

- l'amplitude de référence est déterminée à partir d'au moins une valeur de référence de la variable d'effort, la valeur de référence étant représentative d'un effort antagoniste prédéterminé exercé au cours de la commande asymétrique ;
- l'amplitude de référence est déterminée aussi en fonction d'une raideur équivalente de référence associée audit point de mesure, la raideur équivalente de référence correspondant à une absence de jeu ; la raideur équivalente de référence ayant de préférence été préalablement déterminée pour une absence de jeu, suite à une phase préliminaire de paramétrage pour une absence avérée de jeu dans le système de contrôle aérodynamique, la phase préliminaire de paramétrage comprenant de préférence les mêmes phases de commande que la séquence de détection mise en oeuvre ;
- chaque bloc servocommande comprend respectivement au moins un servomoteur, un corps et un élément coulissant par rapport au corps, l'élément coulissant comprenant une tige s'étendant longitudinalement jusqu'à une extrémité raccordée à la gouverne ; et, pour chaque bloc servocommande, un contrôleur étant propre à commander le servomoteur par asservissement en boucle fermée pour engendrer un déplacement de la gouverne par rapport à la partie fixe par déplacement de l'élément coulissant par rapport au corps jusqu'à une position de consigne d'asservissement ;
- la variable d'effort dépend de l'asservissement en boucle fermée du servomoteur par le contrôleur du bloc servocommande au cours de la commande asymétrique ;
- au cours de la commande asymétrique, le premier des blocs servocommandes est commandé pour engendrer de la gouverne par rapport à la partie fixe par déplacement de l'élément coulissant par rapport au corps selon au moins un cycle d'extension et de rétractation de l'élément coulissant par rapport au corps ;
- chaque cycle d'extension et de rétractation comprend, depuis une position neutre, l'extension ou la rétractation de l'élément coulissant jusqu'à une première position extrême, puis la rétractation ou l'extension jusqu'à une deuxième position extrême, puis le retour à la position neutre, la position neutre correspondant de préférence à la position à laquelle est maintenu l'élément coulissant du deuxième bloc servocommande, la position neutre étant de préférence disposée entre la première position extrême et la deuxième position extrême ;
- la détermination de l'amplitude de référence comprend la détermination d'au moins deux valeurs de référence de la variable d'effort, les valeurs de référence étant définies comme les valeurs atteintes par la variable à la première position extrême et à la deuxième position extrême du cycle de déplacement, l'amplitude de référence étant déterminée à partir desdites valeurs de référence ;
- le point de mesure du système de contrôle aérodynamique est un point de la gouverne, le déplacement dudit point de mesure étant par rapport à la partie fixe ; ou le point de mesure du système de contrôle aérodynamique est un point de l'élément coulissant d'un des blocs servocommandes, le déplacement dudit point de mesure étant par rapport au corps ;
- le nombre prédéterminé de points de mesure du système de contrôle aérodynamique est supérieur ou égal à quatre, les points de mesure comprenant ;

    * un point de l'élément coulissant du premier des blocs servocommandes,
    * un point de l'élément coulissant du deuxième des blocs servocommandes,
    * un premier point de la gouverne, le premier point étant disposé plus proche de la tige du premier des blocs servocommandes que de la tige du deuxième des blocs servocommandes, et
    * un deuxième point de la gouverne, le deuxième point étant disposé plus proche de la tige du deuxième des blocs servocommandes que de la tige du premier des blocs servocommandes ;

- ladite phase de commande est une première phase de commande, la séquence de détection de jeu comprenant aussi une deuxième phase de commande inversée, comprenant :

    * la commande asymétrique des blocs servocommandes, au cours de laquelle le deuxième des blocs servocommandes est commandé comme le premier des blocs servocommandes au cours de la commande asymétrique de la première phase, et le premier des blocs servocommandes est commandé comme le deuxième des blocs servocommandes au cours de la commande asymétrique de la première phase ;

 * l'acquisition d'une évolution, au cours de ladite commande asymétrique, d'une variable d'effort représentative d'un effort antagoniste exercé dans un des blocs servocommandes au cours de ladite commande asymétrique ;

et, dans laquelle la phase de détection de jeu comprend, pour chaque phase de commande mise en oeuvre, la vérification d'au moins une condition de détection en fonction de ladite évolution acquise lors de la phase de commande ;

- chaque bloc servocommande est hydraulique, et, pour chaque bloc servocommande, le corps délimite un espace interne et l'élément coulissant comprend aussi un piston de commande disposé dans l'espace interne, l'espace interne étant partagé par le piston de commande entre une chambre d'extension et une chambre de rétraction, le servomoteur de chaque bloc servocommande comprenant un distributeur hydraulique pour acheminer un fluide provenant d'une source de fluide vers la chambre d'extension et/ou vers la chambre de rétraction, le contrôleur étant propre à commander le distributeur hydraulique du servomoteur pour engendrer un déplacement de l'élément coulissant par rapport au corps, et, dans laquelle la variable d'effort est fonction des pressions mesurées de la chambre d'extension et de la chambre de rétraction du bloc servocommande ;

- la condition de détection est respectée au moins si ladite évolution acquise de la variable d'effort présente une région où la variable d'effort est représentative d'un effort de contrainte exercé sur l'un des blocs servocommandes par la gouverne qui est nul au cours de ladite commande asymétrique, la région présentant de préférence une étendue supérieure à un seuil de détection de jeu prédéterminée.

L'invention concerne également un système de détection d'un jeu dans un système de contrôle aérodynamique, le système de contrôle aérodynamique comprenant une partie fixe, une gouverne mobile par rapport à la partie fixe, et une servocommande, la servocommande comprenant deux blocs servocommandes redondants, chaque bloc servocommande étant propre à engendrer un déplacement de la gouverne par rapport à la partie fixe ;

caractérisé en ce que le système de détection comprend une unité de contrôle configurée pour commander indépendamment chaque bloc servocommande et pour mettre en oeuvre une séquence de détection de jeu comprenant au moins une phase de commande et une phase de détection de jeu,

- la phase de commande comprenant :

 * la commande asymétrique des blocs servocommandes, au cours de laquelle un premier des blocs servocommandes est commandé pour engendrer un déplacement de la gouverne par rapport à la partie fixe, pendant que le deuxième des blocs servocommandes est commandé différemment;

 * l'acquisition d'une évolution, au cours de ladite commande asymétrique, d'une variable d'effort représentative d'un effort antagoniste exercé dans un des blocs servocommandes au cours de ladite commande asymétrique ;

- la phase de détection de jeu comprenant la vérification d'au moins une condition de détection en fonction de ladite évolution acquise, un jeu étant détecté si la condition de détection est respectée.

L'invention apparaîtra plus clairement à la lecture de la description qui va suivre, donnée uniquement à titre d'exemple non limitatif, et faite en référence aux dessins dans lesquels :

[Fig. 1] la figure 1 est une vue schématique en coupe d'un système de détection et d'une gouverne d'aéronef concernée par l'invention ;
[Fig. 2] [Fig. 3] les figures 2 et 3 sont des vues schématiques de la gouverne lors d'une méthode de détection de l'invention ;
[Fig. 4] la figure 4 correspond à un organigramme schématique d'une méthode selon l'invention ; et
[Fig. 5] [Fig. 6] les figures 5 et 6 sont des vues schématiques d'exemples de courbes d'évolution acquises lors de la méthode de détection.

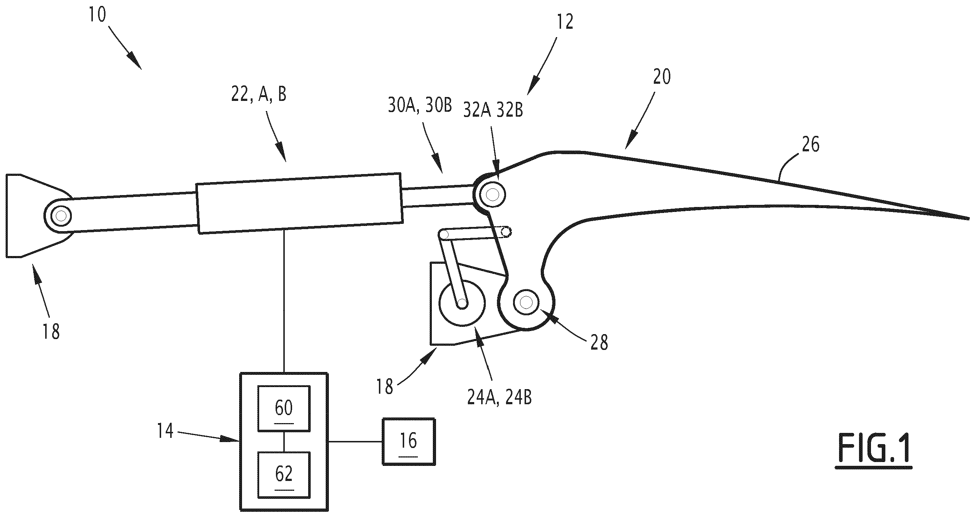

Un système de détection 10 d'un jeu dans un système de contrôle aérodynamique 12, par exemple d'un aéronef, est illustré sur la figure 1.

Le système de détection 10 comprend ainsi le système de contrôle aérodynamique 12 et une unité de contrôle 14 configurée pour mettre en œuvre une séquence de détection de jeu 102.

Le système de détection 10 comprend aussi un système de capteurs 16 pour la mise en œuvre de la séquence de détection de jeu 102.

Le système de contrôle aérodynamique 12 comprend une partie fixe 18, une gouverne 20, mobile par rapport à la partie fixe 18 et une servocommande 22, la servocommande 22 comprenant au moins deux blocs servocommandes redondants A et B.

Le système de contrôle aérodynamique 12 comprend aussi de préférence au moins deux capteurs de déplacement 24A, 24B de la gouverne 20 par rapport à la partie fixe 18.

La partie fixe 18 est en particulier fixe par rapport à une structure de l'aéronef.

Dans l'exemple de la figure 1, la gouverne 20 est un flaperon. En variante, la gouverne 20 est de tout type envisageable, par exemple un aileron, une gouverne de direction, une gouverne de profondeur, une gouverne d'un ensemble hypersustentateur, un aérofrein ou tout autre gouverne mue par un actionneur.

La gouverne 20 est en contact avec une masse d'air extérieure à l'aéronef. Elle présente une surface 26 dont un déplacement, par exemple un changement d'orientation, par rapport à ladite partie fixe 18 génère un changement d'une force aérodynamique.

La gouverne 20 est par exemple configurée pour que ladite surface 26 permette de contrôler l'orientation de l'aéronef selon son axe de tangage, de roulis et/ou de lacet.

La gouverne 20 est typiquement mobile en rotation par rapport à la partie fixe 18 entre au moins deux positions, dont une est illustrée sur la figure 1.

La gouverne 20 présente alors au moins une articulation 28 avec la partie fixe 18.

La gouverne 20 est par exemple formée d'un assemblage rigide d'une pluralité de pièces fixées les unes aux autres.

Les capteurs de déplacement 24A, 24B sont propres à mesurer le déplacement, par rapport à la partie fixe 18, de deux points de mesure respectifs de la gouverne 20.

Les capteurs de déplacement 24A, 24B sont embarqués, et intégrés de manière non escamotable dans le système de contrôle aérodynamique 12. Ces capteurs 24A, 24B ne sont donc pas ajoutés spécifiquement pour mettre en œuvre la méthode. Les capteurs 24A, 24B sont les capteurs fonctionnels nécessaires au pilotage de la gouverne 20 dans des conditions nominales d'utilisation en cours de vol.

Les capteurs de déplacement 24A, 24B sont placés par exemple au voisinage de la servocommande 22.

Les points de mesure comprennent en particulier un premier point de la gouverne 20, le premier point étant disposé plus proche d'un premier des blocs servocommandes B que d'un deuxième des blocs servocommandes A (capteur 24B), et un deuxième point de la gouverne 20, le deuxième point étant disposé plus proche du deuxième des blocs servocommandes A que du premier des blocs servocommandes B (capteur 24A).

Les capteurs 24A et 24B traduisent par exemple deux points de mesure de la gouverne 20 de chaque côté de la servocommande 22.

Les capteurs de déplacement 24A, 24B sont par exemple des capteurs de type SSU (de l'anglais « Secondary sensor Unit »). Tout autre capteur peut être envisagé dans le cadre de l'invention.

La servocommande 22 est configurée pour engendrer un déplacement de la gouverne 20 par rapport à la partie fixe 18, par l'intermédiaire d'une chaîne mécanique 30A, 30B par bloc servocommande 22A, 22B.

Chaque chaîne mécanique 30A, 30B comprend une pluralité d'organes d'assemblage, tels que des attaches (vis et/ou boulons), des guignols, et/ou des paliers.

La servocommande 22 est avantageusement connectée à un système de commande de vol embarqué de l'aéronef.

Le système de commande de vol embarqué de l'aéronef est alors propre à commander la servocommande 22, par exemple en cours de vol. En particulier, en cours de vol, un pilote de l'aéronef est propre à commander la servocommande 22 par l'intermédiaire du système de commande de vol.

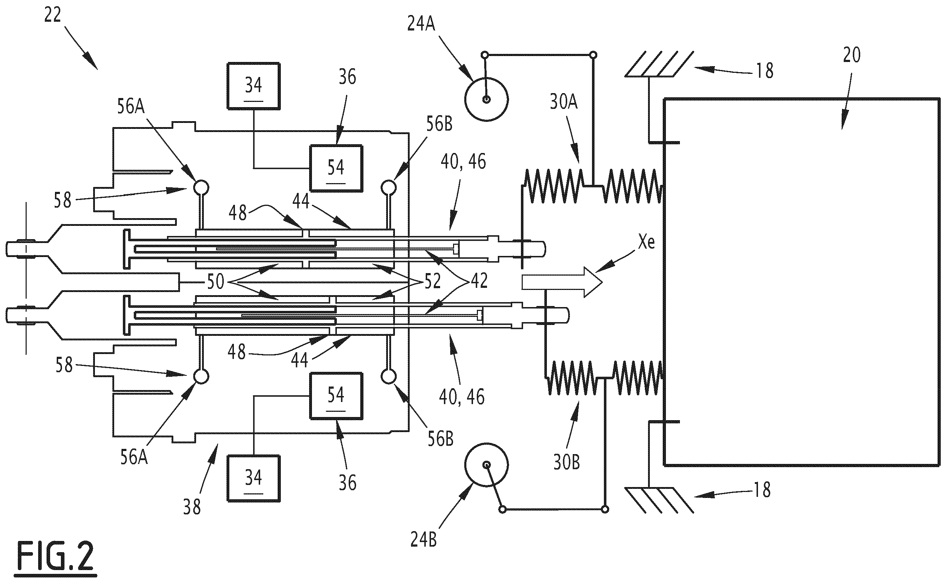

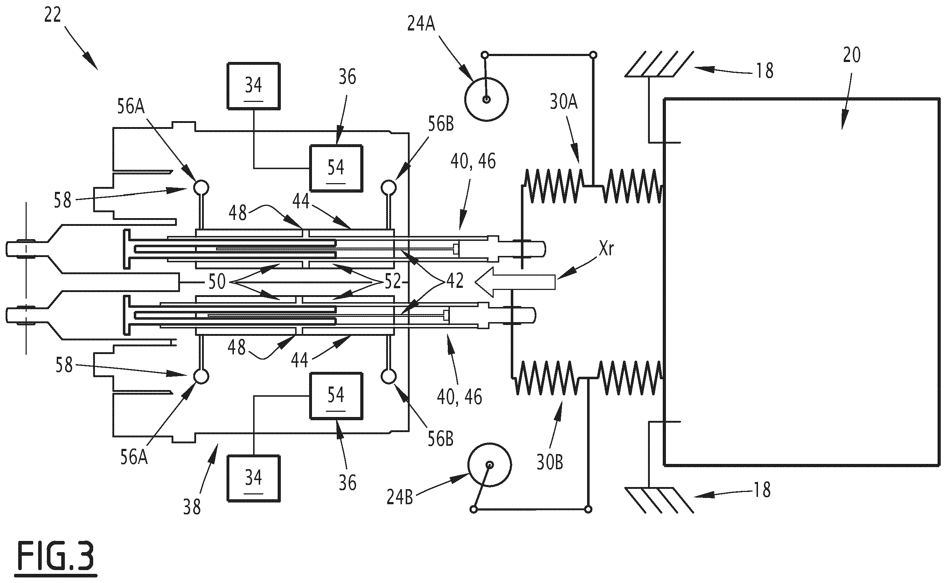

Dans l'exemple illustré sur les figures 2 et 3, la servocommande 22 ne comprend que deux blocs servocommandes redonnant A, B.

Chaque bloc servocommande A, B est propre à engendrer un déplacement de la gouverne 20 par rapport à la partie fixe 18.

En fonctionnement nominal du système de contrôle aérodynamique 12, par exemple en cours de vol de l'aéronef, les blocs servocommandes redonnant A, B sont propre à être commandés de manière conjointe et identique, par exemple par le système de commande de vol de l'aéronef.

Les chaînes mécaniques 30A, 30B des deux blocs servocommandes redondants A, B sont raccordées à la gouverne 20 au niveau de deux points de raccordement 32A, 32B de la gouverne 20.

Les deux points de raccordement 32A, 32B sont fixes en position par rapport à la gouverne 20 pendant tout déplacement de la gouverne 20 par rapport à la partie fixe 18.

Les deux points de raccordement 32A, 32B sont par exemple disposés entre les deux points de mesure des capteurs de déplacement 24A, 24B du système de contrôle aérodynamique 12.

Chaque bloc servocommande A, B comprend respectivement au moins un servomoteur 36, un corps 38 et un élément coulissant 40 par rapport au corps 38.

Le système de contrôle aérodynamique 12 comprend aussi, pour chaque bloc servocommande A, B, un contrôleur 34 du bloc servocommande. Le contrôleur 34 est par exemple inclus dans le système de commande de vol embarqué de l'aéronef.

Chaque bloc servocommande A, B comprend aussi un capteur de position 42 de l'élément coulissant 40 par rapport au corps 38.

Dans un premier mode de réalisation, qualifié d'hydraulique par la suite et illustré sur les figures 2 et 3, chaque bloc servocommande A, B est hydraulique.

Le corps 38 est de préférence solidaire de la partie fixe 18.

En particulier, le corps 38 est articulé avec la partie fixe 18.

Le corps 38 reste par exemple immobile par rapport à la partie fixe 18 lors de tout déplacement de la gouverne 20 par rapport à la partie fixe 18.

Le corps 38 délimite un espace interne 44, dans lequel l'élément coulissant 40 est propre à se déplacer entre une position pleinement rétractée et une position pleinement déployée.

Les positions pleinement rétractée et pleinement déployée sont définies comme les positions les plus extrêmes atteignables par l'élément coulissant 40. En particulier, l'élément coulissant 40 est par exemple en butée dans chacune de ces positions.

L'élément coulissant 40 est mobile par rapport au corps 38, par exemple de manière rectiligne dans une direction longitudinale.

L'élément coulissant 40 comprend de préférence une tige 46 s'étendant longitudinalement jusqu'à une extrémité raccordée à la chaîne mécanique 30A, 30B.

Dans l'exemple illustré sur les figures 2 et 3, la tige 46 est creuse. La partie creuse est allongée longitudinalement.

Dans le premier mode de réalisation hydraulique, l'élément coulissant 40 comprend aussi un piston de commande 48 disposé dans l'espace interne 44 du corps 38.

L'espace interne 44 est alors partagé de manière étanche par le piston de commande 48 entre une chambre d'extension 50 et une chambre de rétractation 52.

Le servomoteur 36 est propre à fournir l'énergie mécanique pour engendrer le déplacement de l'élément coulissant 40 par rapport au corps 38.

Dans le premier mode de réalisation hydraulique, le servomoteur 36 est alors hydraulique.

Le servomoteur 36 comprend par exemple un distributeur hydraulique 54 propre à acheminer un fluide provenant d'une source de fluide vers la chambre d'extension et/ou vers la chambre de rétractation 52, et inversement.

Le fluide est par exemple un gaz ou un liquide.

La source de fluide est alors par exemple le circuit hydraulique de l'aéronef. La source de fluide délivre alors une pression, par exemple constante, au distributeur hydraulique 54.

Le distributeur hydraulique 54 comprend de préférence au moins un capteur de pression 56A, 56B d'au moins une des chambres 50, 52. Avantageusement, le distributeur hydraulique 54 comprend un capteur de pression 56A de la chambre d'extension 50 et un autre capteur de pression 56B de la chambre de rétractation 52.

Les capteurs de pression 56A, 56B ne sont pas utilisés fonctionnellement en cours de vol de l'aéronef. Les capteurs de pression 56A, 56B ne sont typiquement utilisés que lors de tests de fiabilité avant départ ou en maintenance pour faire des réglages de la servocommande 22.

Le capteur de position 42 est propre à acquérir une position courante d'un point de mesure de l'élément coulissant 40 par rapport au corps 38. Le point de mesure est un point de la tige 46.

Le capteur de position 42 est solidaire d'une part au corps 38 et est d'autre part à au point de mesure de la tige 46.

Le capteur de position 42 comprend par exemple un capteur LVDT (de l'anglais Linear Variable Differential Transformer). Tout autre type de capteur de position connu de l'homme du métier est envisageable dans le cadre de l'invention.

Dans l'exemple des figures 2 et 3, le capteur de position 42 est disposé à l'intérieur de la partie creuse de la tige 46.

Le contrôleur 34 est par exemple réalisé sous forme d'un composant logique programmable, tel qu'un FPGA (de l'anglais *Field Programmable Gate Array),* ou encore d'un circuit intégré, tel qu'un ASIC (de l'anglais *Application Specific Integrated Circuit*). En variante, le contrôleur 34 est par exemple réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le contrôleur 34 est propre à commander le servomoteur 36 par asservissement en boucle fermée pour engendrer un déplacement de la gouverne 20 par rapport à la partie fixe 18 par déplacement de l'élément coulissant 40 par rapport au corps 38, jusqu'à une position de consigne d'asservissement.

Au cours de l'asservissement en boucle fermée, le contrôleur 34 est propre à comparer la position de consigne d'asservissement à la position courante de l'élément coulissant 40, acquise par le capteur de position 42, et à commander le servomoteur 36 pour corriger l'éventuelle différence jusqu'à atteindre et maintenir l'élément coulissant 40 à la position de consigne d'asservissement.

L'élément coulissant 40 est ainsi maintenu à la position de consigne d'asservissement par le servomoteur 36, une fois celle-ci atteinte.

Dans le premier mode de réalisation hydraulique, le contrôleur 34 est propre à commander le distributeur hydraulique 54 du servomoteur 36 pour engendrer un déplacement de l'élément coulissant 40 par rapport au corps 38.

En particulier, le contrôleur 34 est propre à commander le distributeur hydraulique 54 du servomoteur 36 pour alimenter la chambre d'extension 50 de sorte à engendrer une extension de l'élément coulissant 40 vers la position pleinement déployée, ou pour alimenter la chambre de rétraction 52 de sorte à engendrer une rétraction de l'élément coulissant 40 vers la position pleinement rétractée.

Les capteurs de pression 56A, 56B ne sont pas utilisés en fonctionnel lors de l'asservissement en position. En d'autres termes, les pressions mesurées par les capteurs de pression 56A, 56B ne sont pas utilisées dans la boucle d'asservissement pour déplacer l'élément coulissant 40 jusqu'à la position de consigne d'asservissement.

Le système de capteurs 16 du système de détection 10 intervient dans la mise en œuvre de la séquence de détection 102.

De préférence, le système de capteurs 16 comprend au moins un capteur d'effort 58, propre à acquérir une variable d'effort représentative d'un effort antagoniste exercé dans un des blocs servocommandes A, B au cours de ladite commande asymétrique, comme décrit par la suite.

Avantageusement, le système de capteurs 16 comprend un capteur d'effort 58 pour chacun des blocs servocommandes A, B. Chaque capteur d'effort 58 mesure une variable d'effort représentative de l'effort antagoniste exercé dans le bloc A, B associé.

Dans le premier mode de réalisation hydraulique, pour chaque bloc servocommande A, B, le capteur d'effort 58 correspond avantageusement à l'ensemble formé du capteur de pression 56A de la chambre d'extension 50 et du capteur de pression 56B de la chambre de rétraction 52 du bloc servocommande A, B associé.

Le système de capteurs 16 comprend aussi par exemple, pour chaque bloc servocommande A, B, ledit capteur de position 42 de l'élément coulissant 40.

De plus, le système de capteurs 16 comprend par exemple au moins deux capteurs de déplacement de la gouverne 20 par rapport à la partie fixe 18. Il s'agit de préférence des capteurs de déplacement intégrés 24A, 24B.

Ainsi, dans un tel mode de réalisation préféré, l'ensemble du système de capteurs 16 est intégré de manière non escamotable dans le système de contrôle aérodynamique 12. L'ensemble du système de capteurs 16 est en particulier formé par des capteurs utilisés lors du fonctionnement nominal du système de contrôle aérodynamique en cours de vol.

En variante, au moins un ou chacun des capteurs de déplacement du système de capteurs 16 du système de détection 10 n'est pas un des capteurs de déplacement 24A, 24B intégrés dans le système de contrôle aérodynamique 12. Au moins un desdits capteurs de déplacement du système de capteurs 16 est alors un capteur extérieur au système de contrôle aérodynamique 12 et en particulier extérieur à l'aéronef. Un tel capteur extérieur est par exemple un capteur laser, un tel capteur étant connu de l'homme du métier.

L'unité de contrôle 14 est propre à mettre en œuvre une séquence de détection de jeu 102 qui sera décrite ultérieurement.

Pour ce faire, l'unité de contrôle 14 comprend par exemple un dispositif de traitement informatique 60 connecté de manière opérationnelle à une mémoire informatique 62, par exemple, un processeur de signal numérique (DSP), un microcontrôleur, un réseau de cellules programmables (FPGA de l'anglais *Field Programmable Gate Array*) et/ou un circuit intégré dédié (ASIC de l'anglais *Application Specific Integrated Circuit*) capables d'exécuter diverses opérations de traitement de données et de fonctions, en particulier au moins la séquence de détection 102 décrite par la suite.

Le dispositif de traitement informatique 60 comprend par exemple un seul processeur. Alternativement, le dispositif de traitement informatique 60 comprend plusieurs processeurs, qui sont situés dans une même zone géographique, ou sont, au moins partiellement, situés dans des zones géographiques différentes et sont alors propres à communiquer entre eux.

Par le terme « mémoire », on entend toute mémoire informatique volatile ou non volatile appropriée au sujet actuellement divulgué, telle qu'une mémoire vive (RAM), une mémoire morte (ROM) ou d'autres éléments électroniques, optique, magnétique ou tout autre support de stockage lisible par ordinateur sur lequel les données et les fonctions de commande telles que décrites ici sont stockées.

Par conséquent, la mémoire 62 est un support de stockage tangible où les données et les fonctions de commande sont stockées sous une forme non transitoire.

Dans un exemple de réalisation, l'unité de contrôle 14 est embarquée, et intégrée de manière non escamotable à l'aéronef. L'unité de contrôle 14 est par exemple alors propre à commander aussi la servocommande 22 en fonctionnement nominal de l'aéronef, par exemple en cours de vol de l'aéronef. L'unité de contrôle 14 est par exemple dans ce cas incluse dans le système de commande de vol embarqué de l'aéronef. Un opérateur de l'aéronef est propre à enclencher la séquence de détection de jeu 102, par exemple par l'intermédiaire d'une interface homme-machine.

L'unité de contrôle 14 est propre à inhiber le déclenchement de la séquence de détection de jeu si l'aéronef est en cours de vol ou en cours de manoeuvre au sol.

Alternativement, l'unité de contrôle 14 est escamotable par rapport à l'aéronef et donc dissociée de l'aéronef. L'unité de contrôle 14 est alors par exemple incluse dans un banc d'essai connectable de manière amovible à la servocommande 22.

L'unité de contrôle 14 est configurée pour commander indépendamment chaque bloc servocommande A, B.

Plus précisément, l'unité de contrôle 14 est configurée pour envoyer un signal de commande d'asservissement, par exemple de position de consigne d'asservissement, au contrôleur 34 de chaque bloc servocommande A, B, de manière indépendante.

L'unité de contrôle 14 est propre à envoyer des signaux de commande différents aux contrôleurs 34 des deux blocs servocommandes A, B, les signaux commandant alors deux asservissements distincts, par exemple deux positions de consigne d'asservissement distinctes.

L'unité de contrôle 14 est aussi connectée au système de capteurs 16 pour acquérir l'évolution des différentes mesures faites au cours du temps par les capteurs du système de capteurs 16, comme il sera décrit plus en détails par la suite.

Une méthode 100 de détection de jeu selon l'invention va maintenant être décrite en référence aux figures 2 à 6.

La méthode 100 de détection de jeu comprend une séquence de détection de jeu 102 comprenant au moins une phase de commande 104A, 104B et une phase de détection de jeu 106.

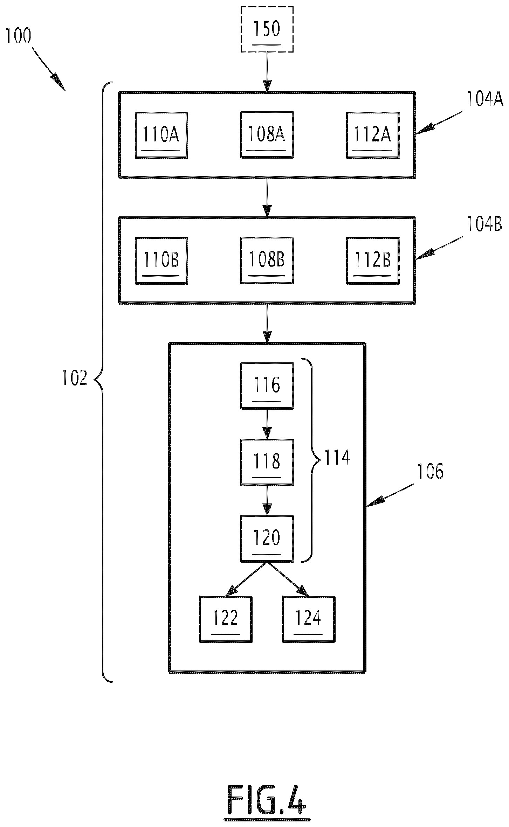

Dans un mode de réalisation préféré, illustré sur la figure 4, la phase de commande est répétée de manière inversée. En particulier, ladite phase de commande 104A est une première phase de commande, la séquence de détection de jeu 102 comprenant aussi une deuxième phase de commande inversée 104B.

La séquence de détection de jeu 102 est de préférence mise en œuvre par l'unité de contrôle 14.

La première phase de commande 104A va maintenant être décrite.

La première phase de commande 104A comprend au moins la commande asymétrique 108A des blocs servocommandes A, B.

Au cours de la commande asymétrique 108A, un premier des blocs servocommandes B est commandé pour engendrer un déplacement de la gouverne 20 par rapport à la partie fixe 18, pendant que le deuxième des blocs servocommandes A est commandé différemment.

Au cours de la commande asymétrique 108A, l'unité de contrôle 14 envoie ainsi des signaux de commande différents aux contrôleurs 34 des deux blocs servocommandes A, B. Les signaux de commande commandent alors deux asservissements distincts.

Dans l'exemple préféré illustré sur les figures 2 et 3, au cours de la commande asymétrique 108A, le deuxième des blocs servocommandes A est commandé pour maintenir en position la gouverne 20 par rapport à la partie fixe 18.

Plus précisément, au cours de la commande asymétrique 108A, le contrôleur 34 du premier bloc servocommande B est alors commandé pour commander le servomoteur 36 par asservissement en boucle fermée pour engendrer un déplacement de l'élément coulissant 40 par rapport au corps 38, pendant que le contrôleur 34 du deuxième des blocs servocommandes A est commandé pour commander le servomoteur 36 par asservissement en boucle fermée pour maintenir l'élément coulissant 40 dans une position de consigne d'asservissement prédéterminée par rapport au corps 38.

Avantageusement, comme illustré sur les figures 2 et 3, au cours de la commande asymétrique 108A, le premier des blocs servocommandes B est commandé pour engendrer le déplacement de la gouverne 20 par rapport à la partie fixe 18 par déplacement de l'élément coulissant 40 par rapport au corps 38 selon au moins un cycle d'extension et de rétraction de l'élément coulissant 40 par rapport au corps 38.

Ledit déplacement de l'élément coulissant 40 par rapport au corps 38 comprend par exemple un unique cycle ou une pluralité de cycles, les cycles étant alors de préférence identiques.

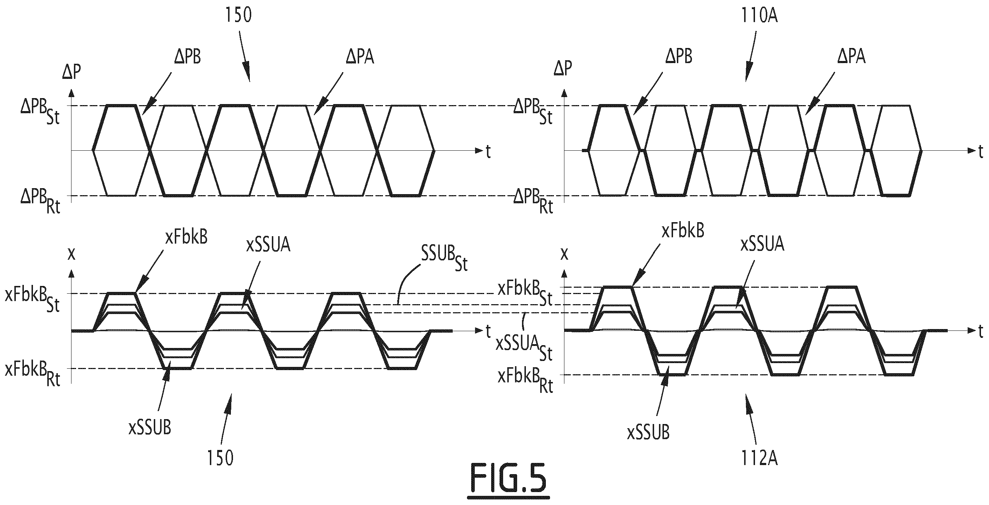

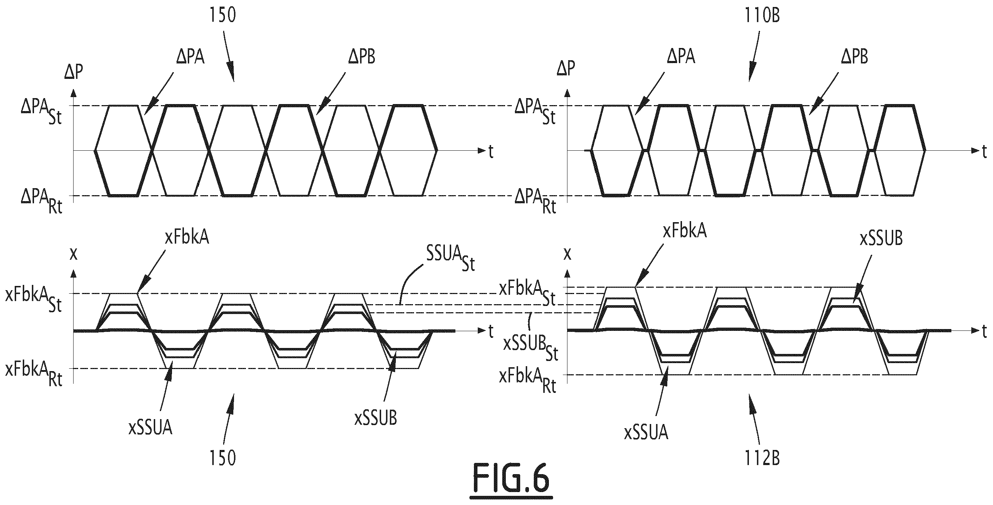

Un exemple de cycle est illustré sur les figures 5 et 6.

Chaque cycle d'extension et de rétraction comprend, depuis une position neutre, l'extension (illustrée par la flèche Xe sur la figure 3) ou la rétraction de l'élément coulissant 40 jusqu'à une première position extrême, puis la rétraction (illustrée par la flèche Xr sur la figure 4) ou l'extension jusqu'à une deuxième position extrême, puis le retour à la position neutre.

De préférence, la première position extrême et la deuxième position extrême sont déterminées en fonction de la variable d'effort décrite plus en détails ci-dessous.

Plus précisément, l'unité de contrôle 14 est configurée pour surveiller la variable d'effort pendant le cycle (comme indiqué ci-dessous), et pour arrêter le déplacement de l'élément coulissant 40 auxdites positions extrêmes, lorsque la variable d'effort est représentative d'un effort antagoniste exercé au-dessus d'un seuil de force prédéterminé.

Le seuil de force prédéterminé est choisi pour ne pas engendrer de dommage sur les blocs A, B et pour être répétable pour plusieurs cycles.

Ainsi, les positions extrêmes du cycle ne correspondent pas nécessairement aux positions pleinement rétractée et pleinement déployée atteignables par l'élément coulissant 40, mais correspondent plutôt aux positions où l'effort antagoniste exercé dépasse le seuil prédéterminé.

Chaque cycle comprend de préférence un plateau à la première position extrême et un plateau à la deuxième position extrême, les plateaux étant par exemple de même durée, la durée étant de préférence non nulle.

Au cours du cycle, le passage de la première position extrême à la deuxième position extrême est fait sans arrêt à la position neutre.

La position neutre correspond de préférence à la position à laquelle est maintenu l'élément coulissant 40 du deuxième bloc servocommande A, c'est-à-dire la position de consigne d'asservissement prédéterminée.

La position neutre est de préférence disposée entre la première position extrême et la deuxième position extrême. En particulier, l'amplitude entre la première position extrême et la deuxième position extrême est par exemple centrée sur la position neutre.

La première phase de commande 104A comprend aussi l'acquisition 110A d'une évolution, au cours de ladite commande asymétrique 108A, d'une variable d'effort représentative d'un effort antagoniste exercé dans un des blocs servocommandes A, B au cours de ladite commande asymétrique 108A.

L'acquisition 110A est par exemple mise en œuvre par le capteur d'effort 58 du système de capteurs 16.

La première phase de commande 104A comprend alors l'enregistrement de ladite évolution acquise, par exemple dans une mémoire 62 de l'unité de contrôle 14.

Par « évolution », on entend l'évolution au cours du temps de ladite variable d'effort pendant la commande asymétrique 108A. Il s'agit en particulier du changement au cours du temps de ladite variable d'effort au cours de la commande asymétrique 108A.

Ladite évolution acquise correspond en particulier à toute la durée de la commande asymétrique 108A.

La variable d'effort est par exemple représentative de l'effort antagoniste de contrainte exercé dans le premier des blocs servocommandes B qui engendre le déplacement de la partie mobile 20.

Au cours de la commande asymétrique 108A, la variable d'effort est représentative d'un effort antagoniste de contrainte résultant de la commande asymétrique 108A des blocs servocommandes A, B. Plus précisément, l'effort antagoniste de contrainte résulte d'un conflit de force dû aux commandes différentes de la gouverne 20 par les blocs servocommandes A, B.

En effet, dans chaque bloc servocommande A, B, le contrôleur 34 commande le servomoteur 36 pour compenser l'effort de contrainte exercé afin de respecter l'asservissement commandé au cours de la commande asymétrique 108A.

L'acquisition 110A de la variable d'effort permet donc d'avoir accès indirectement à l'effort antagoniste de contrainte exercé, et donc de détecter un jeu, comme décrit plus en détails par la suite.

Dans le premier mode de réalisation hydraulique, la variable d'effort est fonction de la pression d'au moins une des chambres 50, 52, de préférence fonction des pressions mesurées de la chambre d'extension 50 et de la chambre de rétractation 52, et encore de préférence fonction de la différence entre les pressions de la chambre d'extension 50 et de la chambre de rétractation 52 d'un des blocs servocommandes A, B.

Par exemple, la variable d'effort est une fonction linéaire de la différence entre les pressions de la chambre d'extension 50 et de la chambre de rétractation 52 d'un des blocs servocommandes A, B.

L'acquisition 110A est par exemple alors mise en œuvre par le capteur d'effort 58 formé par l'ensemble formé du capteur de pression 56A de la chambre d'extension 50 et du capteur de pression 56B de la chambre de rétractation 52.

Un exemple 110A d'évolution acquise pour la première phase 112A est illustré sur la droite de la figure 5. Dans cet exemple, un jeu est ici présent au niveau de la chaîne mécanique 30S associée au premier bloc servocommande B.

L'acquisition 110A de la variable d'effort est mise en œuvre simultanément avec la commande asymétrique 108A. Comme indiqué ci-dessus, les positions extrêmes du cycle de déplacement de la commande asymétrique 108A sont déterminées par surveillance de la variable d'effort acquise.

La première phase de commande 104A comprend aussi, pour chacun d'un nombre prédéterminé de point(s) de mesure du système de contrôle aérodynamique 12, l'acquisition 112A d'une évolution d'un déplacement du point de mesure au cours de ladite commande asymétrique 108A.

La première phase de commande 104A comprend alors l'enregistrement de chaque évolution acquise, par exemple dans une mémoire 62 de l'unité de contrôle 14.

Le point de mesure est un point de la gouverne 20, le déplacement dudit point de mesure étant alors par rapport à la partie fixe 18 ; ou le point de mesure est un point de l'élément coulissant 40 d'un des blocs servocommandes A, B, le déplacement dudit point de mesure étant alors par rapport au corps 38.

Dans un exemple de réalisation, le nombre prédéterminé de points de mesure du système de contrôle aérodynamique 12 est supérieur ou égal à deux.

Les points de mesure comprennent alors un point de l'élément coulissant 40 du premier des blocs servocommandes B et un point de l'élément coulissant 40 du deuxième des blocs servocommandes A.

L'acquisition 112A de ces points de mesure est par exemple mise en œuvre à partir des capteurs de position 42 des blocs servocommandes A, B.

Dans un exemple de réalisation, le nombre prédéterminé de points de mesure du système de contrôle aérodynamique 12 est supérieur ou égal à quatre.

Les points de mesure comprennent alors en plus :

- un premier point de la gouverne 20, le premier point étant disposé plus proche de la tige 46 du premier des blocs servocommandes B que de la tige 46 du deuxième des blocs servocommandes A, et
- un deuxième point de la gouverne 20, le deuxième point étant disposé plus proche de la tige 46 du deuxième des blocs servocommandes A que de la tige 46 du premier des blocs servocommandes B.

L'acquisition 112A de ces points de mesure est de préférence mise en œuvre par exemple à partir des capteurs de déplacement intégrés 24A, 24B dans le système de contrôle aérodynamique 12.

Un exemple 112A d'évolutions acquises pour la première phase est illustré sur la droite de la figure 5.

L'acquisition 112A de l'évolution du déplacement est mise en œuvre simultanément avec la commande asymétrique 108A et l'acquisition 110A de la variable d'effort.

La deuxième phase de commande 104B comprend aussi la commande asymétrique 108B des blocs servocommandes A, B.

La commande asymétrique 108B de la deuxième phase est inversée par rapport à la commande asymétrique 108A de la première phase de commande 104A.

Plus précisément, au cours de la commande asymétrique 108B de la deuxième phase 104B, le deuxième des blocs servocommandes A est commandé comme le premier des blocs servocommandes B au cours de la commande asymétrique 108A de la première phase 104A, et le premier des blocs servocommandes B est commandé comme le deuxième des blocs servocommandes A au cours de la commande asymétrique 108A de la première phase 104A.

Ainsi, au cours de la commande asymétrique 108B de la deuxième phase 104B, le deuxième des blocs servocommandes A est commandé pour engendrer un déplacement de la gouverne 20 par rapport à la partie fixe 18 comme le premier des blocs servocommandes B au cours de la commande asymétrique 108A de la première phase 104A, pendant que le premier des blocs servocommandes B est commandé différemment comme le deuxième des blocs servocommandes A au cours de la commande asymétrique 108A de la première phase 104A.

La deuxième phase de commande 104B comprend aussi l'acquisition 110B d'une évolution, au cours de ladite commande asymétrique 108B, d'une variable d'effort représentative d'un effort antagoniste exercé dans un des blocs servocommandes A, B au cours de ladite commande asymétrique 108B.

La variable d'effort est par exemple alors représentative de l'effort antagoniste exercé dans le deuxième des blocs servocommandes A qui engendre le déplacement de la gouverne 20.

La deuxième phase de commande 104B comprend alors l'enregistrement de l'évolution acquise, par exemple dans une mémoire 62 de l'unité de contrôle 14.

Un exemple 110B d'évolution acquise pour la deuxième phase 10B est illustré sur la droite de la figure 6. Cet exemple correspond à la même situation que pour la figure 5, c'est-à-dire qu'un jeu est ici présent au niveau de la chaîne mécanique 30S associée au premier bloc servocommande B.

L'acquisition 110B de la variable d'effort est mise en œuvre simultanément avec la commande asymétrique 108B. Comme indiqué ci-dessus, les positions extrêmes du cycle de déplacement de la commande asymétrique 108B sont déterminées par surveillance de la variable d'effort acquise.

De plus, la deuxième phase de commande 104B comprend, pour chacun du nombre prédéterminé de point(s) de mesure du système de contrôle aérodynamique 12, l'acquisition 112B d'une évolution d'un déplacement du point de mesure au cours de ladite commande asymétrique 108B de la deuxième phase 104B.

Il s'agit en particulier du ou des mêmes point(s) de mesure que dans la première phase 104A.

La deuxième phase de commande 104B comprend alors l'enregistrement de chaque évolution acquise, par exemple dans une mémoire 62 de l'unité de contrôle 14.

Un exemple 112B d'évolutions acquises pour la deuxième phase 104B est illustré sur la droite de la figure 6.

L'acquisition 112B de l'évolution du déplacement est mise en œuvre simultanément avec la commande asymétrique 108B et l'acquisition 110B de la variable d'effort.

La phase de détection de jeu 106 comprend la vérification 114 d'au moins une condition de détection en fonction de ladite évolution acquise de la variable d'effort, un jeu étant détecté si la condition de détection est respectée.

De préférence, la phase de détection de jeu 106 comprend, pour chaque phase de commande 104A, 104B mise en œuvre, la vérification 114 d'au moins une condition de détection en fonction de ladite évolution acquise de la variable d'effort lors de la phase de commande 104A, 104B.

Plus précisément, la phase de détection de jeu 106 comprend, pour chaque point de mesure de chaque phase de commande 104A, 104B, la vérification 114 d'une condition de détection associée au point de mesure et à la phase de commande 104A, 104B.

Dans un mode de réalisation préféré, pour chaque point de mesure de chaque phase de commande 104A, 104B, la vérification 114 comprend la détermination 116 d'une amplitude de déplacement dudit point de mesure, atteinte au cours de l'évolution acquise dudit déplacement du point de mesure lors de la phase de commande 104A, 104B.

Toutes les positions dudit point de mesure, atteintes au cours de l'évolution acquise, sont comprises dans l'amplitude de déplacement déterminée.

Dans un mode de réalisation préféré, pour chaque point de mesure de chaque phase de commande 104A, 104B, la vérification 114 comprend aussi la détermination 118 d'une amplitude de référence associée audit point de mesure.

L'amplitude de référence est déterminée au moins en fonction de l'évolution acquise de la variable d'effort.

L'amplitude de référence est avantageusement déterminée à partir d'au moins une valeur de référence de la variable d'effort représentative d'un effort antagoniste prédéterminé exercé au cours de la commande asymétrique.

L'effort antagoniste prédéterminé est par exemple l'effort antagoniste maximal exercé au cours de la commande asymétrique.

La détermination 118 de l'amplitude de référence comprend de préférence la détermination d'au moins deux valeurs de référence de la variable d'effort, les valeurs de référence étant définies comme les valeurs atteintes par la variable à la première position extrême et à la deuxième position extrême du cycle de déplacement, l'amplitude de référence étant déterminée à partir desdites valeurs de référence.

En d'autres termes, les valeurs de référence sont associées aux positions extrêmes du cycle et traduisent un effort antagoniste maximal exercé au sein du bloc associé.

Dans l'exemple préféré de réalisation où les positions extrêmes du cycle sont déterminées par surveillance de la variable d'effort, les valeurs de référence correspondent de préférence aux valeurs représentatives du seuil de force prédéterminé.

Dans le premier mode de réalisation hydraulique, les valeurs de référence de la variable d'effort correspondent par exemple à la différence de pression $\Delta P_{ST}$ associée à la position extrême du cycle où l'élément coulissant 40 est le plus sorti, et à la différence de pression $\Delta P_{RT}$ associée à la position extrême du cycle où l'élément coulissant 40 est le plus rentré.

L'amplitude de référence est par exemple déterminée à partir de la somme des valeurs de référence $\Delta PA_{ST}$ et $\Delta PA_{RT}$.

Dans le premier mode de réalisation hydraulique, où la variable d'effort est homogène à une pression, l'amplitude de référence est déterminée aussi en fonction de la surface active S de la tige 46 de l'élément coulissant 40 du bloc servocommande A, B associé à la variable d'effort. La surface active S correspond à la surface de la tige 46 sur laquelle s'exprime la pression.

Dans un mode de réalisation préférée, l'amplitude de référence est déterminée aussi en fonction d'une raideur équivalente de référence associée audit point de mesure et à la phase de commande 104A, 104B, la raideur équivalente de référence correspondant à une absence de jeu.

Chaque raideur équivalente de référence est en particulier stockée dans une mémoire 62 de l'unité de contrôle 14 avant la mise en œuvre de la séquence de détection de jeu 102, par exemple sous forme d'une matrice telle que celle du tableau ci-dessous :

[Tab. 1] Exemple de matrice de raideurs équivalentes de référence

| | Force (par exemple $\Delta P*S$) | Raideur équivalente de référence K (par exemple en daN/°) | | | |
|---|---|---|---|---|---|
| | (en daN) | Point de mesure de l'élément coulissant du bloc A (FbkA) | Point de mesure de la gouverne proche du bloc A (SSUA) | Point de mesure de la gouverne proche du bloc B (SSUB) | Point de mesure de l'élément coulissant du bloc B (FBKB) |
| Phase de commande : bloc servocommande A mobile et bloc servocommande B immobile | $F_A$ | $KFbkA_{Amobile}$ | $KSSUA_{Amobile}$ | $KSSUB_{Amobile}$ | $KFbkB_{Amobile}$ |

(suite)

|  | Force (par exemple ΔP*S) | Raideur équivalente de référence K (par exemple en daN/°) | | | |
|---|---|---|---|---|---|
|  | (en daN) | Point de mesure de l'élément coulissant du bloc A (FbkA) | Point de mesure de la gouverne proche du bloc A (SSUA) | Point de mesure de la gouverne proche du bloc B (SSUB) | Point de mesure de l'élément coulissant du bloc B (FBKB) |
| Phase de commande : bloc servocommande B mobile et bloc servocommande A immobile | $F_B$ | $KFbkAB_{mobile}$ | $KSSUA_{Bmobile}$ | $KSSUB_{Bmobile}$ | $KFbkB_{Bmobile}$ |

Chaque raideur équivalente de référence a de préférence été préalablement déterminée pour une absence de jeu.

Par exemple, chaque raideur équivalente de référence a été préalablement déterminée pour une absence de jeu, suite à une phase préliminaire 150 de paramétrage pour une absence avérée de jeu dans le système de contrôle aérodynamique 12.

La phase préliminaire 150 de paramétrage est par exemple mise en œuvre en sortie de chaîne de fabrication du système de contrôle aérodynamique 12, après avoir vérifié une absence avérée de jeu.

La phase préliminaire 150 de paramétrage comprend de préférence les mêmes phases de commande que la séquence de détection 102 mise en œuvre.

Lors de la phase préliminaire 150 de paramétrage, pour la phase de commande préliminaire où le bloc servocommande B est mobile, les raideurs équivalentes de rigidité au niveau des points de mesure sont par exemple déterminées suivant les relations suivantes :

$$[\text{Math 1}] \quad KFbkB_{Bmobile} = \frac{|\Delta PB_{ST}| + |\Delta PB_{RT}|}{XFbkB_{ST} - XFbkB_{RT}} * S$$

$$[\text{Math 2}] \quad KSSUB_{Bmobile} = \frac{|\Delta PB_{ST}| + |\Delta PB_{RT}|}{XSSUB_{ST} - XSSUB_{RT}} * S$$

$$[\text{Math 3}] \quad KFbkA_{Bmobile} = \frac{|\Delta PB_{ST}| + |\Delta PB_{RT}|}{XFbkA_{ST} - XFbkA_{RT}} * S$$

$$[\text{Math 4}] \quad KSSUA_{Bmobile} = \frac{|\Delta PB_{ST}| + |\Delta PB_{RT}|}{XSSUA_{ST} - XSSUA_{RT}} * S$$

où $\Delta PB_{ST}$ est la différence de pression $\Delta P_{ST}$ dans les chambres du bloc B, associée à la position extrême du cycle où l'élément coulissant 40 est le plus sorti au cours de la commande asymétrique de la phase préliminaire 150,
où $\Delta PB_{RT}$ est la différence de pression $\Delta P_{RT}$ dans les chambres du bloc B, associée à la position extrême du cycle où l'élément coulissant 40 est le plus rentré au cours de la commande asymétrique de la phase préliminaire 150,
où S est la section de la tige de chaque élément coulissant 40 du bloc B, et
où les dénominateurs de ces relations correspondent aux amplitudes de déplacement, lors de la phase préliminaire 150 sans jeu, du point de mesure de l'élément coulissant 40 du bloc A (XFbkA), du deuxième point de mesure de la gouverne proche du bloc A (XSSUA), du premier point de mesure de la gouverne proche du bloc B (XSSUB) et du point de mesure de l'élément coulissant 40 du bloc B (XFbkB).

Lors de la phase préliminaire 150 de paramétrage, pour la phase de commande préliminaire où le bloc servocommande A est mobile, les raideurs équivalentes de rigidité au niveau des points de mesure sont déterminées par exemple de la même manière.

La détermination de telles raideurs équivalentes de référence est avantageuse, dans la mesure où il n'est pas nécessaire de reproduire exactement le même cycle de déplacement pour la séquence de détection 102 que celui qui a été mis en œuvre pour la phase préliminaire 150.

Cette manière de déterminer chaque raideur équivalente de référence n'est pas limitative, et l'homme du métier saura adapter tout autre manière envisageable. Par exemple, la matrice des raideurs équivalentes de référence est une matrice universelle correspondant à une moyenne sur un nombre prédéterminé d'aéronefs.

Dans un mode de réalisation préféré, pour chaque point de mesure de chaque phase de commande 104A, 104B, la vérification 114 comprend en outre la comparaison 120 de l'amplitude de déplacement dudit point de mesure avec l'amplitude de référence.

Il est alors possible de déterminer une matrice des différences $\Delta X$ entre les amplitudes de déplacement déterminées et les amplitudes de référence pour chaque point de mesure de chaque phase de commande 104A, 104B, sous la forme :

[Tab. 2] Exemple de matrice des différences d'amplitudes

| Force (par exemple $\Delta P*S$) | Différences $\Delta X$ entre amplitudes de déplacement déterminées et amplitudes de référence (par exemple en °) | | | |
|---|---|---|---|---|
| | (en daN) | Point de mesure de l'élément coulissant du bloc A (FbkA) | Point de mesure de la gouverne proche du bloc A (SSUA) | Point de mesure de la gouverne proche du bloc B (SSUB) | Point de mesure de l'élément coulissant du bloc B (FBKB) |
| Phase de commande 104B : bloc servocommande A mobile et bloc servocommande B immobile | $F_A$ | $\Delta XFbkA_{Amobile}$ | $\Delta XSSUA_{Amobile}$ | $\Delta XSSUB_{Amobile}$ | $\Delta XFbkB_{Amobile}$ |
| Phase de commande 104A : bloc servocommande B mobile et bloc servocommande A immobile | $F_B$ | $\Delta XFbkA_{Bmobile}$ | $\Delta XSSUA_{Bmobile}$ | $\Delta XSSUB_{Bmobile}$ | $\Delta XFbkB_{Bmobile}$ |

Pour chaque point de mesure de chaque phase de commande 104A, 104B, la condition de détection est alors respectée au moins si la différence entre l'amplitude de déplacement dudit point de mesure et l'amplitude de référence est supérieure à un seuil de détection de jeu prédéterminée.

Le seuil de détection correspond par exemple à un seuil réglementaire de jeu maximal autorisé.

Lorsque la condition de détection est respectée, la phase de détection de jeu 106 comprend alors de préférence l'envoi 122 d'un signal d'alarme à destination d'un opérateur. L'alarme est par exemple visuelle et/ou auditive.

Lorsque la condition de détection est respectée, la phase de détection de jeu 106 comprend de préférence la détermination 124 d'une localisation du jeu au niveau de la chaîne mécanique 30N, 30S associée à l'un des blocs servocommandes A, B.

La localisation du jeu est déterminée à partir de la comparaison, pour chaque point de mesure de chaque phase de commande 104A, 104B, de l'amplitude de déplacement avec l'amplitude de référence.

Dans l'exemple des figures 5 et 6 avec présence d'un jeu au niveau du bloc servocommande B, au cours de la première phase où le bloc servocommande B est mobile et le bloc servocommande A est immobile, il sera constaté que l'amplitude de déplacement $XFbkB_{ST}$-$XFbkB_{RT}$ de l'élément coulissant 40 du bloc servocommande B (référencée 110A à droite de la figures 5) est supérieure à l'amplitude de référence (référencée 150 à gauche de la figures 5). Les amplitudes de déplacement des deux points de mesure de la gouverne 20 sont égales à leurs amplitudes de référence respectives.

De plus, au cours de la deuxième phase où le bloc servocommande B est immobile et le bloc servocommande A est mobile, il sera constaté que l'amplitude de déplacement $XFbkA_{ST}$-$XFbkA_{RT}$ de l'élément coulissant 40 du bloc servocommande A, et les amplitudes de déplacement SSUB, SSUA des deux points de mesure de la gouverne 20 (référencée 112B à droite de la figure 6) sont supérieures à leurs amplitudes de référence respectives (référencée 150 à gauche de la figure 6).

Suite à la détection d'un jeu, il est par la suite possible de mettre en œuvre une méthode conventionnelle, telle que décrite ci-dessus, de mesure précise du jeu qui a été détecté par la méthode 100 selon l'invention.

Dans un autre mode de réalisation, la condition de détection est respectée au moins si ladite évolution acquise de la variable d'effort présente une région où la variable d'effort est représentative d'un effort antagoniste de contrainte exercé sur l'un des blocs servocommandes A, B par la gouverne 20 qui est nul, au cours de ladite commande asymétrique 108A, 108B.

La condition de détection est de préférence respectée si la région présente une étendue supérieure à un seuil de détection de jeu prédéterminée.

Ces régions sont notamment visibles sur les figures 5 et 6, et correspondent aux plateaux où la différence de pressions s'annule.

Dans le premier mode de réalisation hydraulique, les régions correspondent à des différences de pression nulles entre les chambres 50, 52, pendant le déplacement de l'élément coulissant 40 d'un des blocs servocommandes A, B.

En effet, en cas de jeu, ces régions correspondent respectivement à un déplacement de l'élément coulissant 40 commandé mais sans déplacement de la gouverne 20, et donc sans effort de contrainte résultant de la commande asymétrique 108A, 108B.

De préférence, la condition de détection est respectée au moins si ladite évolution acquise présente, pour chaque cycle, une telle région.

Dans un autre mode de réalisation, le capteur d'effort comprend une jauge de contrainte collée à un élément du bloc servocommande. La variable d'effort est alors déterminée à partir de la jauge de contrainte.

Dans un deuxième mode de réalisation non illustré, chaque bloc servocommande A, B est électrique.

Dans le deuxième mode de réalisation électrique, le servomoteur 36 comprend alors de préférence un stator et un rotor, et est propre à convertir une alimentation électrique en rotation du rotor par rapport au stator pour engendrer un déplacement de l'élément coulissant 40 par rapport au corps 38.

Le servomoteur 36 est par exemple tout type de moteur électrique connu de l'homme du métier.

La variable d'effort est alors par exemple une variable électrique du servomoteur 36, telle qu'une intensité générée par l'effort antagoniste exercé.

En variante, la séquence de détection 102 ne comprend qu'une seule phase de commande.

Grâce aux caractéristiques précédemment décrites, il est possible de détecter un jeu dans un système de contrôle aérodynamique 12 d'un aéronef, sans retrait d'actionneur, sans outil spécifique et par l'opérateur de l'aéronef lui-même (c'est-à-dire sans nécessité d'ingénieur spécialisé).

De plus, il est possible d'automatiser facilement cette méthode 100, puisqu'elle peut ne faire appel qu'à des capteurs intégrés dans le système de contrôle aérodynamique 12 si nécessaire.

**Revendications**

1. Méthode (100) de détection d'un jeu dans un système de contrôle aérodynamique (12), le système de contrôle aérodynamique (12) comprenant une partie fixe (18), une gouverne (20) mobile par rapport à la partie fixe (18), et une servocommande (22), la servocommande (22) comprenant au moins deux blocs servocommandes redondants (A, B), chaque bloc servocommande (A, B) étant propre à engendrer un déplacement de la gouverne (20) par rapport à la partie fixe (18) ;

   **caractérisée en ce que** la méthode (100) comprend une séquence de détection de jeu (102) comprenant au moins une phase de commande (104A, 104B) et une phase de détection de jeu (106),

   - la phase de commande (104A, 104B) comprenant :

     * la commande asymétrique (108A, 108B) des blocs servocommandes (A, B), au cours de laquelle un premier des blocs servocommandes (A, B) est commandé pour engendrer un déplacement de la gouverne (20) par rapport à la partie fixe (18), pendant que le deuxième des blocs servocommandes (A, B) est commandé différemment ;
     * l'acquisition (110A, 110B) d'une évolution, au cours de ladite commande asymétrique (108A, 108B), d'une variable d'effort représentative d'un effort antagoniste exercé dans un des blocs servocommandes (A, B) au cours de ladite commande asymétrique (108A, 108B) ;

- la phase de détection de jeu (106) comprenant la vérification (114) d'au moins une condition de détection de jeu en fonction de ladite évolution acquise, un jeu étant détecté si la condition de détection est respectée.

2. Méthode (100) selon la revendication 1, dans laquelle, au cours de la commande asymétrique (108A, 108B), le deuxième des blocs servocommandes (A, B) est commandé pour maintenir en position la gouverne (20) par rapport à la partie fixe (18).

3. Méthode (100) selon l'une quelconque des revendications 1 ou 2, dans laquelle la phase de commande (104A, 104B) comprend en outre, pour chacun d'un nombre prédéterminé de point(s) de mesure du système de contrôle aérodynamique (12), l'acquisition (112A, 112B) d'au moins une évolution d'un déplacement du point de mesure au cours de ladite commande asymétrique (108A, 108B),

et, dans laquelle la phase de détection de jeu (106) comprend, pour chaque point de mesure, la vérification (114) d'une condition de détection associée au point de mesure, la vérification (114) comprenant :

* la détermination (116) d'une amplitude de déplacement dudit point de mesure, atteinte au cours de l'évolution acquise dudit déplacement du point de mesure ;
* la détermination (118) d'une amplitude de référence associée audit point de mesure, l'amplitude de référence étant déterminée au moins en fonction de l'évolution acquise de la variable d'effort, et
* la comparaison (120) de l'amplitude de déplacement dudit point de mesure avec l'amplitude de référence, la condition de détection de jeu étant respectée au moins si la différence entre l'amplitude de déplacement dudit point de mesure et l'amplitude de référence est supérieure à un seuil de détection de jeu prédéterminée.

4. Méthode (100) selon la revendication 3, dans laquelle l'amplitude de référence est déterminée à partir d'au moins une valeur de référence de la variable d'effort, la valeur de référence étant représentative d'un effort antagoniste prédéterminé exercé au cours de la commande asymétrique.

5. Méthode (100) selon l'une quelconque des revendications 3 ou 4, dans laquelle l'amplitude de référence est déterminée aussi en fonction d'une raideur équivalente de référence associée audit point de mesure, la raideur équivalente de référence correspondant à une absence de jeu ; la raideur équivalente de référence ayant de préférence été préalablement déterminée pour une absence de jeu, suite à une phase préliminaire (150) de paramétrage pour une absence avérée de jeu dans le système de contrôle aérodynamique (12), la phase préliminaire (150) de paramétrage comprenant de préférence les mêmes phases de commande que la séquence de détection mise en œuvre.

6. Méthode (100) selon l'une quelconque des revendications précédentes, dans laquelle chaque bloc servocommande (A, B) comprend respectivement au moins un servomoteur (36), un corps (38) et un élément coulissant (40) par rapport au corps (38), l'élément coulissant (40) comprenant une tige (46) s'étendant longitudinalement jusqu'à une extrémité raccordée à la gouverne (20) ; et, pour chaque bloc servocommande (A, B), un contrôleur (34) étant propre à commander le servomoteur (36) par asservissement en boucle fermée pour engendrer un déplacement de la gouverne (20) par rapport à la partie fixe (18) par déplacement de l'élément coulissant (40) par rapport au corps (38) jusqu'à une position de consigne d'asservissement.

7. Méthode (100) selon la revendication 6, dans laquelle la variable d'effort dépend de l'asservissement en boucle fermée du servomoteur (36) par le contrôleur (34) du bloc servocommande (A, B) au cours de la commande asymétrique (108A, 108B).

8. Méthode (100) selon l'une quelconque des revendications 6 ou 7, dans laquelle, au cours de la commande asymétrique (108A, 108B), le premier des blocs servocommandes (A, B) est commandé pour engendrer de la gouverne (20) par rapport à la partie fixe (18) par déplacement de l'élément coulissant (40) par rapport au corps (38) selon au moins un cycle d'extension et de rétractation de l'élément coulissant (40) par rapport au corps (38).

9. Méthode (100) selon la revendication 8, dans laquelle chaque cycle d'extension et de rétractation comprend, depuis une position neutre, l'extension ou la rétractation de l'élément coulissant (40) jusqu'à une première position extrême, puis la rétractation ou l'extension jusqu'à une deuxième position extrême, puis le retour à la position neutre, la position neutre correspondant de préférence à la position à laquelle est maintenu l'élément coulissant (40) du deuxième bloc servocommande (A, B), la position neutre étant de préférence disposée entre la première position extrême et la deuxième position extrême ;

et, de préférence, la détermination (118) de l'amplitude de référence comprend la détermination d'au moins deux valeurs de référence de la variable d'effort, les valeurs de référence étant définies comme les valeurs atteintes par la variable à la première position extrême et à la deuxième position extrême du cycle de déplacement, l'amplitude de référence étant déterminée à partir desdites valeurs de référence.

10. Méthode (100) selon l'une quelconque des revendications 6 ou 7, prise en combinaison de l'une quelconque des revendications 3 à 5, dans laquelle le point de mesure du système de contrôle aérodynamique (12) est un point de la gouverne (20), le déplacement dudit point de mesure étant par rapport à la partie fixe (18) ; ou le point de mesure du système de contrôle aérodynamique (12) est un point de l'élément coulissant (40) d'un des blocs servocommandes (A, B), le déplacement dudit point de mesure étant par rapport au corps (38).

11. Méthode (100) selon la revendication 8, dans laquelle le nombre prédéterminé de points de mesure du système de contrôle aérodynamique (12) est supérieur ou égal à quatre, les points de mesure comprenant ;

- un point de l'élément coulissant (40) du premier des blocs servocommandes (A, B),
- un point de l'élément coulissant (40) du deuxième des blocs servocommandes (A, B).
- un premier point de la gouverne (20), le premier point étant disposé plus proche de la tige (46) du premier des blocs servocommandes (A, B) que de la tige (46) du deuxième des blocs servocommandes (A, B), et
- un deuxième point de la gouverne (20), le deuxième point étant disposé plus proche de la tige (46) du deuxième des blocs servocommandes (A, B) que de la tige (46) du premier des blocs servocommandes (A, B).

12. Méthode (100) selon l'une quelconque des revendications précédentes, dans laquelle ladite phase de commande (104A) est une première phase de commande, la séquence de détection de jeu (102) comprenant aussi une deuxième phase de commande inversée (104B), comprenant :

\* la commande asymétrique (108B) des blocs servocommandes (A, B), au cours de laquelle le deuxième des blocs servocommandes (A, B) est commandé comme le premier des blocs servocommandes (A, B) au cours de la commande asymétrique (108A) de la première phase (104A), et le premier des blocs servocommandes (A, B) est commandé comme le deuxième des blocs servocommandes (A, B) au cours de la commande asymétrique (108A) de la première phase (104A) ;

\* l'acquisition (110B) d'une évolution, au cours de ladite commande asymétrique (108B), d'une variable d'effort représentative d'un effort antagoniste exercé dans un des blocs servocommandes (A, B) au cours de ladite commande asymétrique (108B) ;

et, dans laquelle la phase de détection de jeu (106) comprend, pour chaque phase de commande mise en œuvre (104A, 104B), la vérification (114) d'au moins une condition de détection en fonction de ladite évolution acquise lors de la phase de commande (104A, 104B).

13. Méthode (100) selon l'une quelconque des revendications précédentes, prise en combinaison avec la revendication 7, dans laquelle chaque bloc servocommande (A, B) est hydraulique, et, pour chaque bloc servocommande (A, B), le corps (38) délimite un espace interne (44) et l'élément coulissant (40) comprend aussi un piston de commande (48) disposé dans l'espace interne (44), l'espace interne (44) étant partagé par le piston de commande (48) entre une chambre d'extension (50) et une chambre de rétractation (52), le servomoteur (36) de chaque bloc servocommande (A, B) comprenant un distributeur hydraulique (54) pour acheminer un fluide provenant d'une source de fluide vers la chambre d'extension et/ou vers la chambre de rétractation (52), le contrôleur (34) étant propre à commander le distributeur hydraulique (54) du servomoteur (36) pour engendrer un déplacement de l'élément coulissant (40) par rapport au corps (38),

et, dans laquelle la variable d'effort est fonction des pressions mesurées de la chambre d'extension (50) et de la chambre de rétractation (52) du bloc servocommande (A, B).

14. Méthode (100) selon la revendication 13, dans laquelle la condition de détection est respectée au moins si ladite évolution acquise de la variable d'effort présente une région où la variable d'effort est représentative d'un effort de contrainte exercé sur l'un des blocs servocommandes (A, B) par la gouverne (20) qui est nul au cours de ladite commande asymétrique (108A, 108B), la région présentant de préférence une étendue supérieure à un seuil de détection de jeu prédéterminée.

**15.** Système de détection (10) d'un jeu dans un système de contrôle aérodynamique (12), le système de contrôle aérodynamique (12) comprenant une partie fixe (18), une gouverne (20) mobile par rapport à la partie fixe (18), et une servocommande (22), la servocommande (22) comprenant deux blocs servocommandes redondants (A, B), chaque bloc servocommande (A, B) étant propre à engendrer un déplacement de la gouverne (20) par rapport à la partie fixe (18) ;

**caractérisé en ce que** le système de détection (10) comprend une unité de contrôle (14) configurée pour commander indépendamment chaque bloc servocommande (A, B) et pour mettre en œuvre une séquence de détection de jeu (102) comprenant au moins une phase de commande (104A, 104B) et une phase de détection de jeu (106),

- la phase de commande (104A, 104B) comprenant :

* la commande asymétrique (108A, 108B) des blocs servocommandes (A, B), au cours de laquelle un premier des blocs servocommandes (A, B) est commandé pour engendrer un déplacement de la gouverne (20) par rapport à la partie fixe (18), pendant que le deuxième des blocs servocommandes (A, B) est commandé différemment ;
* l'acquisition (110A, 110B) d'une évolution, au cours de ladite commande asymétrique (108A, 108B), d'une variable d'effort représentative d'un effort antagoniste exercé dans un des blocs servocommandes (A, B) au cours de ladite commande asymétrique (108A, 108B) ;

- la phase de détection de jeu (106) comprenant la vérification (114) d'au moins une condition de détection en fonction de ladite évolution acquise, un jeu étant détecté si la condition de détection est respectée.

FIG.1

FIG.2

EP 4 671 122 A1

FIG.3

FIG.4

FIG.5

FIG.6

**EP 4 671 122 A1**

## RAPPORT DE RECHERCHE EUROPEENNE

Numéro de la demande

EP 25 18 5636

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2022/380022 A1 (ROBERTS DANIEL HENRY [US] ET AL) 1 décembre 2022 (2022-12-01) | 1,6,7,15 | INV. B64C3/50 |
| A | * alinéas [0016] - [0035] * <br> * figures 1-3 * <br> ----- | 2-5,8-14 | B64C9/00 <br> B64C13/38 |
| A | EP 3 446 067 B1 (SAFRAN ELECTRONICS & DEFENSE [FR]) 19 février 2020 (2020-02-19) <br> * alinéa [0019] * <br> * figures 1-3 * <br> ----- | 1-15 | ADD. <br> B64C13/50 <br> B64C9/02 <br> B64C9/16 <br> B64C13/42 |
| A | EP 3 835 200 A1 (AIRBUS DEFENCE & SPACE GMBH [DE]) 16 juin 2021 (2021-06-16) <br> * alinéas [0005], [0043] * <br> ----- | 1-15 | B64D45/00 |
| A | EP 3 734 117 B1 (CAMOZZI AUTOMATION S P A [IT]) 20 septembre 2023 (2023-09-20) <br> * alinéas [0017] - [0060] * <br> ----- | 1-15 | |
| A | DE 10 2019 118639 A1 (LIEBHERR AEROSPACE LINDENBERG GMBH [DE]) 14 janvier 2021 (2021-01-14) <br> * alinéas [0029] - [0034] * <br> ----- | 1-15 | |

DOMAINES TECHNIQUES RECHERCHES (IPC)

B64C
B64D

Le présent rapport a été établi pour toutes les revendications

| Lieu de la recherche | Date d'achèvement de la recherche | Examinateur |
|---|---|---|
| Munich | 3 juillet 2025 | Schwaller, Vincent |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 25 18 5636**

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**03-07-2025**

| Document brevet cité au rapport de recherche | Date de publication | Membre(s) de la famille de brevet(s) | Date de publication |
|---|---|---|---|
| US 2022380022 A1 | 01-12-2022 | CA 3160376 A1 | 28-11-2022 |
| | | DE 102022113472 A1 | 01-12-2022 |
| | | FR 3123316 A1 | 02-12-2022 |
| | | US 2022380022 A1 | 01-12-2022 |
| EP 3446067 B1 | 19-02-2020 | CN 109073374 A | 21-12-2018 |
| | | EP 3446067 A1 | 27-02-2019 |
| | | FR 3050523 A1 | 27-10-2017 |
| | | US 2019144135 A1 | 16-05-2019 |
| | | WO 2017182593 A1 | 26-10-2017 |
| EP 3835200 A1 | 16-06-2021 | DE 102019134215 A1 | 17-06-2021 |
| | | EP 3835200 A1 | 16-06-2021 |
| | | US 2021179297 A1 | 17-06-2021 |
| EP 3734117 B1 | 20-09-2023 | AUCUN | |
| DE 102019118639 A1 | 14-01-2021 | AUCUN | |

EPO FORM P0460

Pour tout renseignement concernant cette annexe : voir Journal Officiel de l'Office européen des brevets, No.12/82